# EUROPEAN PATENT APPLICATION

(11) **EP 4 711 642 A1**
(43) Date of publication of application: **18.03.2026**
(21) Application number: 23936600.8
(22) Date of filing: 10.05.2023
(51) Int. Cl.: F16H 1/32, F16B 5/02

(54) **COMPONENT-TIGHTENING STRUCTURE AND STRAIN WAVE GEARING**

(71) Applicant: Harmonic Drive Systems Inc., Shinagawa-ku Tokyo 140-0013 (JP)
(72) Inventor: SHIROKOSHI, Norio, Azumino-shi, Nagano 399-8305 (JP)
(74) Representative: TBK
(86) International application number: PCT/JP2023/017582
(87) International publication number: WO 2024/232047

(57) **Abstract**

Provided is strain wave gearing (1), in which on a fastening surface between a boss (33) on an externally toothed gear (3) and a first end plate (8), formed are tapered fastening surfaces (331, 81), inclined with respect to an orthogonal plane that is orthogonal to a central axis (1a). Additionally, on a fastening surface between an internally toothed gear (2) and a second end plate (10), tapered fastening surfaces (21, 101) are formed. Due to engagement of the tapered fastening surfaces (331, 81) and engagement of the tapered fastening surfaces (21, 101), a firm fastening state can be formed, and radial-direction displacement of the first and second end plates (8, 10) that arises due to radial-direction load can be reduced. Decentering between a wave generator (4) and support bearings (7, 9) originating in the radial-direction displacement can be prevented or controlled, and the acting of unnecessary radial force on the wave generator (4) can be averted.

## Description

### TECHNICAL FIELD

The present invention relates to a component-fastening structure with which a plurality of components are secured by being fastened in an axial direction by fastening bolts, and in particular relates to a strain wave gearing wherein a component-fastening structure is used in fastening and securing an internally toothed gear or an externally toothed gear to an end plate to which there are attached support bearings for supporting an input shaft of the strain wave gearing.

### BACKGROUND ART

A strain wave gearing comprises three components as basic constituent elements, specifically a rigid internally toothed gear, a flexible externally toothed gear, and a wave generator that causes the externally toothed gear to flex into an ellipsoidal shape and partially mesh with the internally toothed gear. The wave generator is caused to rotate, whereby the positions where the externally toothed gear meshes with the internally toothed gear move in a circumferential direction, and the two gears undergo relative rotation that corresponds to the difference between the number of teeth of each of the two gears. One of the gears is fixed so as not to rotate, and reduced rotation is outputted to a load side from the other gear.

As strain wave gearings, there are known to be strain wave gearings having a configuration in which an input shaft is attached to the wave generator and in which the input shaft is supported by support bearings at positions on both axial-direction sides of the wave generator (Patent Documents 1 to 3). The support bearing that supports one axial-direction side of the input shaft is mounted to a fixed-side end plate of a device housing or the like, and the support bearing that supports the other axial-direction side of the input shaft is mounted to an output-side end plate (output shaft) that outputs the reduced rotation. Among the internally toothed gear and the externally toothed gear, the fixed-side gear is secured by being fastened to the fixed-side end plate, and the output-side gear that outputs the reduced rotation is secured by being fastened to the output-side end plate. A load-side component to be driven is connected to the output-side end plate.

In a strain wave gearing having the aforementioned configuration, a load such as the weight of the load-side component to be driven is applied to the output-side end plate. The load applied to the output-side end plate acts on the support bearing that is attached to the output-side end plate. As a result, decentering could occur between the support bearing and the wave generator connected to the input shaft supported by the support bearings. In the strain wave gearing disclosed in Patent Document 1, the input shaft is connected to the wave generator via an Oldham coupling, and such decentering is absorbed by the Oldham coupling.

### PRIOR-ART DOCUMENT

### PATENT DOCUMENT

Patent Document 1: JP 2014-74450 A
Patent Document 2: JP 5496426 B
Patent Document 3: JP 2002-21948 A

### DISCLOSURE OF THE INVENTION

### PROBLEMS TO BE SOLVED BY THE INVENTION

In cases where no Oldham coupling or other coupling is provided to a wave generator, there is a concern that radial force will be applied to the wave generator due to decentering occurring when a load acting from the load side is high or in other such circumstances, and the reliability of the strain wave gearing will be impaired. Such decentering is brought about by radial-direction deformation (deformation in a direction orthogonal to a central axis) occurring, due to the load acting from the load side, in an output-side end plate or a fixed-side end plate supporting the support bearings.

However, in prior-art strain wave gearings, locations for fastening using fastening bolts are designed on the basis of torsional moment (load torque), and because the strength of the fastening in response to the radial force in the fastening locations is sufficient, the radial force is not considered to be important. Specifically, no regard whatsoever is given to radial-direction deformation in the design of the fastening locations.

In view of the foregoing, it is an object of the present invention to provide a component-fastening structure with which a plurality of components can reliably be secured by being fastened by fastening bolts in an axial direction so that it is possible to suppress radial-direction deformation and displacement occurring at fastening locations due to any load acting from the outside.

It is additionally an object of the present invention to provide a gear-fastening structure in a strain wave gearing with which one gear from among an externally toothed gear and an internally toothed gear, and a fixed-side or output-side end plate, can be secured by being fastened by fastening bolts in an axial direction so that it is possible to suppress radial-direction deformation and displacement occurring at fastening locations due to external force applied from a direction orthogonal to a central axis.

It is furthermore an object of the present invention to provide a strain wave gearing in which one gear from among an externally toothed gear and an internally toothed gear, and a fixed-side or output-side end plate, are secured by being fastened by fastening bolts in an axial direction so that it is possible to suppress radial-direction deformation and displacement occurring at fastening locations due to external force applied from a direction orthogonal to a central axis.

### MEANS OF SOLVING THE PROBLEM

The present invention relates to a component-fastening structure with which a first component and a second component are secured by being fastened by fastening bolts in an axial direction, which is a direction extending along a central axis, the component-fastening structure being characterized in that:
the first component is provided with
a first fastening surface formed on one axial-direction end surface,
first bolt holes that open in the first fastening surface and extend through the first component in the axial direction, and
a first tapered fastening surface that is formed on at least a portion of the first fastening surface and is inclined, relative to an orthogonal plane orthogonal to the central axis, by the same angle at individual positions in a circumferential direction; and
the second component is provided with
a second fastening surface that overlaps the first fastening surface in the axial direction in a state of planar contact therewith,
second bolt holes that open in the second fastening surface and extend coaxially with the first bolt holes, and
a second tapered fastening surface that is formed on at least a portion of the second fastening surface and assumes a form complementary to that of the first tapered fastening surface.

Setting the angle of inclination of the first and second tapered fastening surfaces relative to the orthogonal plane to be less than the angle of friction between these fastening surfaces makes it possible to prevent sliding of the fastening surfaces caused by bolt axial force. Additionally, forming portions of the first and second fastening surfaces that surround the bolt holes as orthogonal fastening surfaces orthogonal to the central axis makes it possible to prevent sliding of the fastening surfaces caused by bolt axial force.

The component-fastening structure according to the present invention is suitable for use in fastening and securing a rigid internally toothed gear and a flexible externally toothed gear, which are constituent components of a strain wave gearing, to a fixed-side end plate or an output-side end plate that outputs reduced rotation, the end plates similarly being constituent components of the strain wave gearing.

Moreover, a strain wave gearing according to the present invention is characterized by comprising
a rigid internally toothed gear,
a cup-shaped or top-hat-shaped flexible externally toothed gear coaxially disposed inside the internally toothed gear,
a wave generator coaxially disposed inside the externally toothed gear,
an input shaft coaxially attached to the wave generator,
a first end plate that rotatably supports, via a first support bearing, a first shaft section of the input shaft that extends on one axial-direction side from the wave generator,
a second end plate that rotatably supports, via a second support bearing, a second shaft section of the input shaft that extends on the other axial-direction side from the wave generator,
a plurality of first fastening bolts that fasten and secure an annular or disc-shaped boss formed on the externally toothed gear to the first end plate in the axial direction,
a plurality of second fastening bolts that fasten and secure the internally toothed gear to the second end plate in the axial direction,
a first fastening surface that is formed between the boss of the externally toothed gear and the first end plate fastened by the first fastening bolts, in which bolt holes for the first fastening bolts extend through the first fastening surface, and at least a portion of the first fastening surface is a first tapered fastening surface that is inclined, relative to an orthogonal plane orthogonal to a central axis, by the same angle at individual positions in a circumferential direction; and
a second fastening surface that is formed between the internally toothed gear and the second end plate fastened by the second fastening bolts, in which bolt holes for the second fastening bolts extend through the second fastening surface, and at least a portion of the second fastening surface is a second tapered fastening surface that is inclined, relative to the orthogonal plane, by the same angle at individual positions in the circumferential direction.

### EFFECT OF THE INVENTION

In the component-fastening structure according to the present invention, first and second tapered fastening surfaces that are inclined relative to an orthogonal plane orthogonal to a central axis are formed on a first fastening surface of a first component and a second fastening surface of a second component, the first and second components being fastened by fastening bolts. When external force acts from a direction orthogonal to the central axis, the first and second tapered fastening surfaces engage mechanically from the orthogonal direction; therefore, relative displacement of the first and second components in the orthogonal direction is prevented or suppressed.

Additionally, in the strain wave gearing according to the present invention, a tapered fastening surface that is inclined relative to an orthogonal plane orthogonal to a central axis is formed on a fastening surface between a boss of an externally toothed gear and a first end plate, and another tapered fastening surface is formed on a fastening surface between an internally toothed gear and a second end plate. The tapered fastening surfaces make it possible to reduce radial-direction displacement of the first and second end plates occurring due to any radial-direction load. It is thereby possible to prevent or suppress decentering between a wave generator and support bearings caused by radial-direction displacement occurring due to any radial-direction load acting from a load side, and to avoid circumstances where unnecessary radial force acts on the wave generator.

### BRIEF DESCRIPTION OF THE DRAWINGS

FIG. 1(A) is a schematic longitudinal cross-sectional view of a strain wave gearing to which the present invention is applied, FIG. 1(B) is an end view seen from the side of a first end plate that is a fixed-side component of the strain wave gearing, and FIG. 1(C) is an end view seen from the side of a second end plate that is an output-side component of the strain wave gearing;
FIG. 2 is a half longitudinal cross-sectional view in an enlarged state of the strain wave gearing of FIG. 1; and
FIG. 3 is a diagram showing another example of a fastening structure.

### MODE FOR CARRYING OUT THE INVENTION

A strain wave gearing according to an embodiment to which the present invention is applied shall be described below with reference to the drawings. The embodiment described below is an example of the present invention, but the present invention is not limited to this embodiment and can be applied to a plurality of component-fastening structures in, *inter alia,* gearing devices other than strain wave gearings.

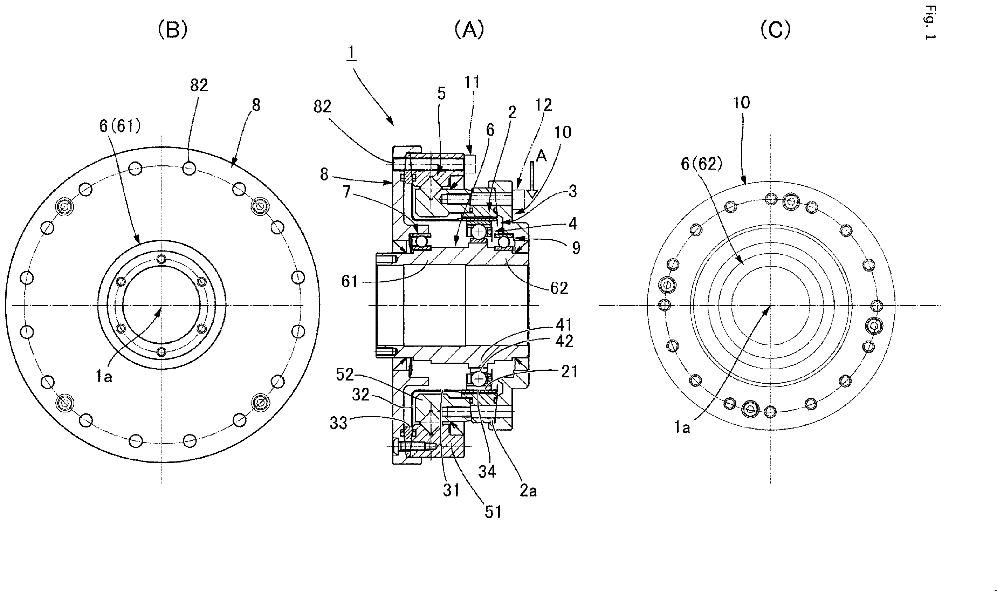

With reference to FIG. 1, a strain wave gearing 1 according to the present embodiment comprises an annularly formed rigid internally toothed gear 2, a flexible externally toothed gear 3 that is coaxially disposed inside the internally toothed gear 2 and is capable of flexing in a radial direction, and a wave generator 4 coaxially disposed inside the externally toothed gear 3. The wave generator 4 causes the externally toothed gear 3 to flex into a non-circular shape, specifically an ellipsoidal shape in the present example, and partially mesh with the internally toothed gear 2, and causes the positions where the two gears 2, 3 mesh to move in a circumferential direction.

The internally toothed gear 2 and the externally toothed gear 3 are supported, in a state enabling relative rotation, by a main bearing 5 composed of, e.g., a cross roller bearing. An input shaft 6 via which rotation is inputted from a motor or the like (not shown) is coaxially attached to the wave generator 4. The wave generator 4 in the present example is provided with: a rigid cam plate 41; and a wave generator bearing 42 that is mounted to a non-circular outer peripheral surface of the cam plate 41, specifically an ellipsoidal outer peripheral surface in the present example. The cam plate 41 is formed integrally with the input shaft 6. It is also permissible to manufacture the cam plate 41 as a separate component and to fasten and secure the cam plate 41 to the input shaft 6 in a coaxial manner. The input shaft 6 is a hollow shaft, but may instead be a solid shaft.

A portion of the input shaft 6 that extends toward one axial-direction side from the cam plate 41 of the wave generator 4 is regarded as a first shaft section 61, and a portion of the input shaft 6 that extends toward the other axial-direction side is regarded as a second shaft section 62. The first shaft section 61 of the input shaft 6 is rotatably supported by a first end plate 8 via a first support bearing 7 composed of a ball bearing or the like. The second shaft section 62 of the input shaft 6 is rotatably supported by a second end plate 10 via a second support bearing 9 composed of a ball bearing or the like. The internally toothed gear 2, the externally toothed gear 3, the wave generator 4, and the main bearing 5 are disposed between the first and second end plates 8, 10.

The externally toothed gear 3 is a "top-hat-shaped externally toothed gear" and is provided with: a cylindrical barrel part 31 capable of flexing in the radial direction; a diaphragm 32 extending radially outward from one end of the cylindrical barrel part 31; an annular boss 33 formed integrally with the outer peripheral edge of the diaphragm 32; and external teeth 34 formed on an outer peripheral surface portion at an open end of the cylindrical barrel part 31, the open end being the other end of the cylindrical barrel part 31. The outside diameter of the boss 33 of the externally toothed gear 3 is greater than the outside diameter of the internally toothed gear 2. The wave generator 4 is fitted into the cylindrical barrel part 31 where the external teeth 34 are formed. The external teeth 34 of the externally toothed gear 3 caused to flex into the ellipsoidal shape by the wave generator 4 mesh with internal teeth 2a of the internally toothed gear 2 at positions on both long-axis ends of the ellipsoidal shape.

The main bearing 5 is disposed in a state of coaxially surrounding portions of the externally toothed gear 3 between the external teeth 34 on the cylindrical barrel part 31 and the diaphragm 32. An outer race 51 of the main bearing 5 is coaxially fixed to the boss 33 of the externally toothed gear 3. In the present example, three components, specifically an outer-peripheral-side portion of the first end plate 8, the boss 33 of the externally toothed gear 3, and the outer race 51, are secured by being fastened by a plurality of first fastening bolts 11 in an axial direction, which is the direction extending along a central axis 1a. An inner race 52 of the main bearing 5 is coaxially fixed to the internally toothed gear 2. In the present example, three components, specifically an outer-peripheral-side portion of the second end plate 10, the internally toothed gear 2, and the inner race 52, are secured by being fastened by a plurality of second fastening bolts 12 in the axial direction.

In the strain wave gearing 1, when the wave generator 4 rotates due to rotation inputted via the input shaft 6, the positions where the externally toothed gear 3 meshes with the internally toothed gear 2 move in the circumferential direction. The internally toothed gear 2 and the externally toothed gear 3 undergo relative rotation that is reduced according to a speed ratio defined by the difference between the number of internal teeth 2a and the number of external teeth 34. In the present example, the externally toothed gear 3 attached to the first end plate 8 (fixed-side end plate) is regarded as a fixed-side gear, and the internally toothed gear 2 attached to the second end plate 10 is regarded as a rotation-side gear. The reduced rotation produced in the internally toothed gear 2 is outputted from the second end plate 10 (output-side end plate), which functions as a reduced-rotation-outputting shaft, to a load-side component (not shown) attached to the second end plate 10.

No Oldham coupling or other coupling is provided to the wave generator 4 of the strain wave gearing 1 of the present example, and the cam plate 41 of the wave generator 4 is formed integrally with the input shaft 6. Decentering could occur between the wave generator 4 and the first and second support bearings 7, 9 mounted to the first and second end plates 8, 10 due to a radial-direction load (indicated by arrow A in FIG. 1(A)) acting on the second end plate 10, which is an output-side component, from a load side. To make it possible to reduce radial-direction deformation of the first and second end plates 8, 10 that would be a factor in bringing about such decentering, a fastening structure between the internally toothed gear 2, the second end plate 10, and the inner race 52 is appropriately set, and a fastening structure between the boss 33 of the externally toothed gear 3, the first end plate 8, and the outer race 51 is also appropriately set.

### (Fastening structures)

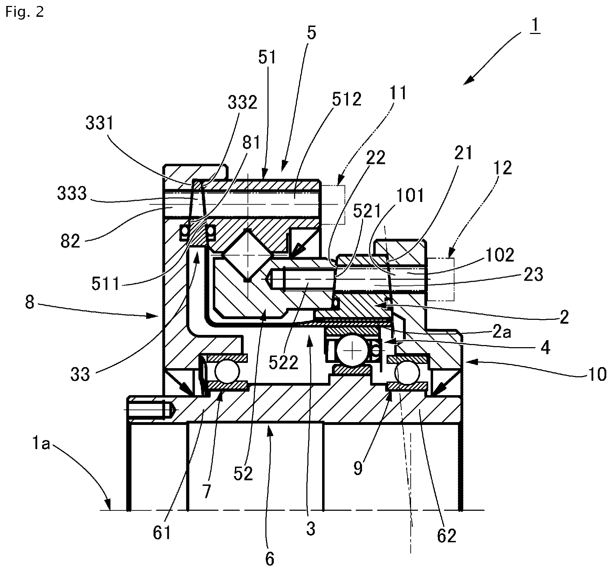

FIG. 2 is a half longitudinal cross-section showing an enlarged view of the strain wave gearing 1 of FIG. 1(A). The fastening structures shall be described below with reference to FIGS. 1 and 2.

The fastening structure between the externally toothed gear 3, the first end plate 8, and the outer race 51 of the main bearing 5 shall be described first. Fastening surfaces formed between the boss 33 of the externally toothed gear 3 and the first end plate 8 and between the boss 33 and the outer race 51, which are fastened by the first fastening bolts 11, are formed as tapered fastening surfaces that are inclined, relative to an orthogonal plane orthogonal to the central axis 1a, by the same angle at individual positions in the circumferential direction. In the present example, a longitudinal cross-section of the boss 33 of the externally toothed gear 3 is formed in a trapezoidal shape so as to taper off from the inner-peripheral side toward the outer-peripheral side, the longitudinal cross-section being sectioned at a plane including the central axis 1a. The two axial-direction end surfaces of the boss 33 are thereby formed as tapered fastening surfaces 331, 332 that are inclined by the same angle in opposite directions. In the boss 33 are formed bolt holes 333 extending therethrough in the axial direction, the bolt holes 333 opening in the tapered fastening surfaces 331, 332.

An end-surface portion of the outer-peripheral-side portion of the first end plate 8 facing the tapered fastening surface 331 is formed as a tapered fastening surface 81 assuming a form complementary to that of the tapered fastening surface 331, and the tapered fastening surfaces 331, 81 overlap in the axial direction in a state of planar contact with each other. In the outer-peripheral-side portion of the first end plate 8 are formed bolt holes 82 extending therethrough in the axial direction, the bolt holes 82 opening in the tapered fastening surface 81. Similarly, an end surface of the outer race 51 of the main bearing 5 that faces the other tapered fastening surface 332 of the boss 33 is formed as a tapered fastening surface 511 assuming a form complementary to that of the tapered fastening surface 332, and the tapered fastening surfaces 332, 511 overlap in the axial direction in a state of planar contact with each other. In the outer race 51 are formed bolt holes 512 extending therethrough in the axial direction, the bolt holes 512 opening in the tapered fastening surface 511.

The tapered fastening surface 81 of the first end plate 8 and the tapered fastening surface 511 of the outer race 51 respectively overlap the tapered fastening surfaces 331, 332 of the boss 33 of the externally toothed gear 3 in the axial direction. The first fastening bolts 11 are passed through the three members, which are thereby fastened and secured. The angle of inclination of the tapered fastening surface 331 and the tapered fastening surface 81 is set within a range exceeding the angle of friction therebetween. Similarly, the angle of inclination of the tapered fastening surface 332 and the tapered fastening surface 511 is set within a range exceeding the angle of friction therebetween. This prevents any sliding between the tapered fastening surfaces 331, 81 and between the tapered fastening surfaces 332, 511 due to bolt axial force during fastening. In cases where a load is applied to these components from the radial direction, mechanical engagement between the tapered fastening surfaces 331, 81 and mechanical engagement between the tapered fastening surfaces 332, 511 suppress radial-direction displacement and offset between the three members (first end plate 8, boss 33 of externally toothed gear 3, and outer race 51 of main bearing 5); therefore, a firm fastening state is achieved.

The fastening structure between the internally toothed gear 2, the second end plate 10, and the inner race 52 of the main bearing 5 shall be described next. Fastening surfaces between the internally toothed gear 2 and the second end plate 10 and fastening surfaces between the internally toothed gear 2 and the inner race 52, which are fastened by the second fastening bolts 12, are each formed as tapered fastening surfaces that are inclined, relative to an orthogonal plane orthogonal to the central axis 1a, by the same angle at individual positions in the circumferential direction. In the present example, a longitudinal cross-section of the internally toothed gear 2 is formed in a trapezoidal shape so as to taper off from the inner-peripheral side toward the outer-peripheral side except at an inner peripheral edge portion where the internal teeth 2a are formed, the longitudinal cross-section being sectioned at a plane including the central axis 1a. The two axial-direction end surfaces of the internally toothed gear 2 are thereby formed as tapered fastening surfaces 21, 22 that are inclined by the same angle in opposite directions. In the internally toothed gear 2 are formed bolt holes 23 extending therethrough in the axial direction, the bolt holes 23 opening in the tapered fastening surfaces 21, 22.

An end-surface portion of the outer-peripheral-side portion of the second end plate 10 facing the tapered fastening surface 21 is formed as a tapered fastening surface 101 assuming a form complementary to that of the tapered fastening surface 21, and the tapered fastening surfaces 21, 101 overlap in the axial direction in a state of planar contact with each other. In the outer-peripheral-side portion of the second end plate 10 are formed bolt holes 102 extending therethrough in the axial direction, the bolt holes 102 opening in the tapered fastening surface 101. Similarly, an end surface of the inner race 52 of the main bearing 5 that faces the other tapered fastening surface 22 of the internally toothed gear 2 is formed as a tapered fastening surface 521 assuming a form complementary to that of the tapered fastening surface 22, and the tapered fastening surfaces 22, 521 overlap in the axial direction in a state of planar contact with each other. Bolt holes 522 extending in the axial direction are formed in the inner race 52, the bolt holes 522 opening in the tapered fastening surface 521.

The tapered fastening surface 101 of the second end plate 10 and the tapered fastening surface 521 of the inner race 52 respectively overlap the tapered fastening surfaces 21, 22 of the internally toothed gear 2 in the axial direction. The second fastening bolts 12 are passed through the three members, which are thereby fastened and secured. The angle of inclination of the tapered fastening surface 21 and the tapered fastening surface 101 is set within a range exceeding the angle of friction therebetween. Similarly, the angle of inclination of the tapered fastening surface 22 and the tapered fastening surface 521 is set within a range exceeding the angle of friction therebetween. This prevents any sliding between the tapered fastening surfaces 21, 101 and between the tapered fastening surfaces 22, 521 due to bolt axial force during fastening. In cases where a load is applied to these components from the radial direction, mechanical engagement between the tapered fastening surfaces 21, 101 and mechanical engagement between the tapered fastening surfaces 22, 521 suppress radial-direction displacement and offset between the three members (second end plate 10, internally toothed gear 2, and inner race 52 of main bearing 5); therefore, a firm fastening state is achieved.

Thus, in the strain wave gearing 1 of the present example, the first end plate 8, the boss 33 of the externally toothed gear 3, and the outer race 51 of the main bearing 5 are secured by being fastened, and the second end plate 10, the internally toothed gear 2, and the inner race 52 of the main bearing 5 are similarly secured by being fastened, using firm fastening structures that do not undergo positional offset with respect to any radial-direction load. It is thereby possible to suppress radial-direction deformation of the first and second end plates 8, 10 occurring due to any radial-direction load acting from the load side. As a result, it is possible to prevent or suppress decentering between the wave generator 4 and the first and second support bearings 7, 9 caused by radial-direction displacement, and to avoid circumstances where excessive radial force acts on the wave generator 4.

### (Other example of fastening structures)

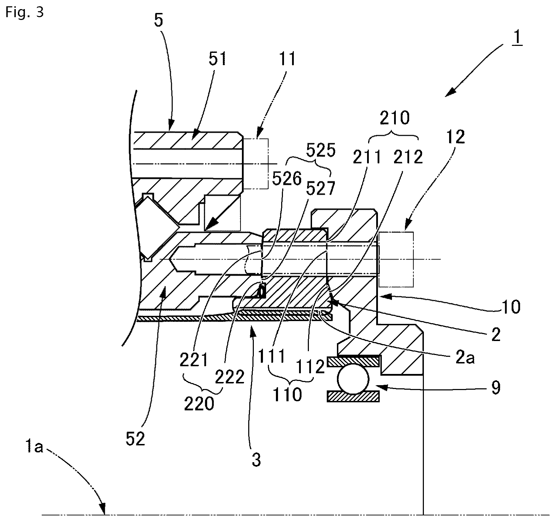

FIG. 3 is a diagram showing another example of the fastening structure for the second end plate 10, the internally toothed gear 2, and the inner race 52 of the main bearing 5 in the strain wave gearing 1. In the fastening structure of the present example, orthogonal fastening surfaces 211, 221 orthogonal to the central axis 1a are formed on fastening surfaces 210, 220 formed on the two axial-direction end surfaces of the internally toothed gear 2. In one fastening surface 210, a tapered fastening surface 212 that is inclined relative to the central axis 1a is formed on the inner-peripheral side of the orthogonal fastening surface 211 except at the inner peripheral edge portion where the internal teeth 2a are formed. Similarly, in the other fastening surface 220, a tapered fastening surface 222 that is inclined relative to the central axis 1a is formed on the inner-peripheral side of the orthogonal fastening surface 221. Bolt holes extending through the internally toothed gear 2 in the axial direction open in the orthogonal fastening surfaces 211, 221. In the present example, the fastening surfaces 210, 220 are formed to have bilateral symmetry.

A fastening surface 110 that overlaps the fastening surface 210 of the internally toothed gear 2 in a state of planar contact therewith is formed on the outer-peripheral-side end surface of the second end plate 10. An orthogonal fastening surface 111 extending in a direction orthogonal to the central axis 1a is formed on the fastening surface 110, and a tapered fastening surface 112 that is inclined relative to the central axis 1a is formed on the inner-peripheral side of the orthogonal fastening surface 111. Bolt holes open in the orthogonal fastening surface 111.

Similarly, a fastening surface 525 that overlaps the fastening surface 220 of the internally toothed gear 2 in a state of planar contact therewith is formed on the end surface of the inner race 52 of the main bearing 5. An orthogonal fastening surface 526 extending in a direction orthogonal to the central axis 1a is formed on the fastening surface 525, and a tapered fastening surface 527 that is inclined relative to the central axis 1a is formed on the inner-peripheral side of the orthogonal fastening surface 526. Bolt holes open in the orthogonal fastening surface 526.

The fastening structure having the aforementioned configuration also makes it possible to firmly fasten and secure the second end plate 10, the internally toothed gear 2, and the inner race 52 of the main bearing 5, and to prevent or suppress radial-direction deformation and positional offset of these components. In this instance, the angle of inclination of the tapered fastening surfaces can be set to exceed the angle of friction relative thereto.

The other fastening structure for the first end plate 8, the boss 33 of the externally toothed gear 3, and the outer race 51 of the main bearing 5 in the strain wave gearing 1 can also be provided with the same configuration.

### (Other embodiments)

The fastening structure according to the present invention can similarly be applied to fastening of components other than constituent gears of a strain wave gearing.

## Claims

1. A component-fastening structure with which a first component and a second component are secured by being fastened by fastening bolts in an axial direction, which is a direction extending along a central axis, the component-fastening structure being **characterized in that**:
the first component is provided with
a first fastening surface formed on one axial-direction end surface,
first bolt holes that open in the first fastening surface and extend through the first component in the axial direction, and
a first tapered fastening surface that is formed on at least a portion of the first fastening surface and is inclined, relative to an orthogonal plane orthogonal to the central axis, by the same angle at individual positions in a circumferential direction; and
the second component is provided with
a second fastening surface that overlaps the first fastening surface in the axial direction in a state of planar contact therewith,
second bolt holes that open in the second fastening surface and extend coaxially with the first bolt holes, and
a second tapered fastening surface that is formed on at least a portion of the second fastening surface and assumes a form complementary to that of the first tapered fastening surface.

2. The component-fastening structure according to claim 1, wherein
an angle of inclination of the first tapered fastening surface relative to the orthogonal plane is less than an angle of friction between the first and second fastening surfaces.

3. The component-fastening structure according to claim 1, wherein:
the first fastening surface is provided with a first orthogonal fastening surface orthogonal to the central axis, and the first bolt holes open in the first orthogonal fastening surface; and
the second fastening surface is provided with a second orthogonal fastening surface orthogonal to the central axis, and the second bolt holes open in the second orthogonal fastening surface.

4. A gear-fastening structure in a strain wave gearing, in which
the strain wave gearing is provided with
a rigid internally toothed gear,
a flexible externally toothed gear,
a fixed-side end plate positioned on one axial-direction side with respect to the internally toothed gear and the externally toothed gear,
an output-side end plate that outputs reduced rotation and is positioned on the other axial-direction side with respect to the internally toothed gear and the externally toothed gear, and
an input shaft that is rotatably supported by support bearings attached to each of the fixed-side end plate and the output-side end plate;
**characterized in** which
a first component and a second component are secured by being fastened to each other by the component-fastening structure according to any of claims 1 to 3, where
the first component is either one from among the internally toothed gear and the externally toothed gear, and
the second component is either end plate from among the fixed-side end plate and the output-side end plate.

5. A strain wave gearing **characterized by** comprising:
a rigid internally toothed gear;
a cup-shaped or top-hat-shaped flexible externally toothed gear coaxially disposed inside the internally toothed gear;
a wave generator coaxially disposed inside the externally toothed gear;
an input shaft coaxially attached to the wave generator;
a first end plate that rotatably supports, via a first support bearing, a first section of the input shaft that extends on one axial-direction side from the wave generator;
a second end plate that rotatably supports, via a second support bearing, a second shaft section of the input shaft that extends on the other axial-direction side from the wave generator;
a plurality of first fastening bolts that fasten and secure an annular or disc-shaped boss formed on the externally toothed gear to the first end plate in the axial direction;
a plurality of second fastening bolts that fasten and secure the internally toothed gear to the second end plate in the axial direction;
a first fastening surface that is formed between the boss of the externally toothed gear and the first end plate fastened by the first fastening bolts, in which bolt holes for the first fastening bolts extend through the first fastening surface, and at least a portion of the first fastening surface is a first tapered fastening surface that is inclined, relative to an orthogonal plane orthogonal to a central axis, by the same angle at individual positions in a circumferential direction; and
a second fastening surface that is formed between the internally toothed gear and the second end plate fastened by the second fastening bolts, in which bolt holes for the second fastening bolts extend through the second fastening surface, and at least a portion of the second fastening surface is a second tapered fastening surface that is inclined, relative to the orthogonal plane, by the same angle at individual positions in the circumferential direction.

6. The strain wave gearing according to claim 5, wherein
an angle of inclination of the first tapered fastening surface relative to the orthogonal plane is less than an angle of friction relative to the first fastening surface, and
the angle of inclination of the second tapered fastening surface relative to the orthogonal plane is less than an angle of friction relative to the second fastening surface.

7. The strain wave gearing according to claim 5, wherein:
the first fastening surface is provided with the first tapered fastening surface and a first orthogonal fastening surface parallel to the orthogonal plane, and the bolt holes for the first fastening bolts penetrate through the first orthogonal fastening surface; and
the second fastening surface is provided with the second tapered fastening surface and a second orthogonal fastening surface parallel to the orthogonal plane, and the bolt holes for the second fastening bolts penetrate through the second orthogonal fastening surface.

8. The strain wave gearing according to claim 5, further comprising
a main bearing mounted between the internally toothed gear and the boss of the externally toothed gear are provided to the strain wave gearing, wherein
the main bearing is provided with a first bearing ring that is either one from among an inner race and an outer race, and a second bearing ring that is the other of the inner race and the outer race, and wherein
the first end plate, the boss of the externally toothed gear, and the first bearing ring of the main bearing are secured by being fastened by the first fastening bolts in a state of being overlapped in the axial direction;
the second end plate, the internally toothed gear, and the second bearing ring of the main bearing are secured by being fastened by the second fastening bolts in a state of being overlapped in the axial direction;
at least a portion of a third fastening surface that is a fastening surface formed between the boss of the externally toothed gear and the first bearing ring fastened by the first fastening bolts is a third tapered fastening surface that is inclined, relative to the orthogonal plane, by the same angle at individual positions in the circumferential direction, an inclination direction of the third tapered fastening surface being opposite from that of the first tapered fastening surface; and
at least a portion of a fourth fastening surface that is a fastening surface formed between the internally toothed gear and the second bearing ring fastened by the second fastening bolts is a fourth tapered fastening surface that is inclined, relative to the orthogonal plane, by the same angle at individual positions in the circumferential direction, an inclination direction of the fourth tapered fastening surface being opposite from that of the second tapered fastening surface.

9. The strain wave gearing according to claim 8, wherein
an angle of inclination of the first tapered fastening surface relative to the orthogonal plane is set to a value less than an angle of friction relative to the first fastening surface,
an angle of inclination of the second tapered fastening surface relative to the orthogonal plane is set to a value less than an angle of friction relative to the second fastening surface,
an angle of inclination of the third tapered fastening surface relative to the orthogonal plane is set to a value less than an angle of friction relative to the third fastening surface, and
an angle of inclination of the fourth tapered fastening surface relative to the orthogonal plane is set to a value less than an angle of friction relative to the fourth fastening surface.

10. The strain wave gearing according to claim 8, wherein:
the third fastening surface is provided with the third tapered fastening surface and a third orthogonal fastening surface parallel to the orthogonal plane, and bolt holes for the first fastening bolts pass through the third orthogonal fastening surface; and
the fourth fastening surface is provided with the fourth tapered fastening surface and a fourth orthogonal fastening surface parallel to the orthogonal plane, and bolt holes for the second fastening bolts pass through the fourth orthogonal fastening surface.
